# EUROPÄISCHE PATENTSCHRIFT

(11) **EP 1 460 450 B1**
(45) Veröffentlichungstag und Bekanntmachung des Hinweises auf die Patenterteilung: **31.12.2008**
(21) Anmeldenummer: 04002527.2
(22) Anmeldetag: 05.02.2004
(51) Int. Cl.: G01S 7/52, G09B 9/56

(54) **Verfahren zur synthetischen Generierung von Sonardaten**
Method for simulating sonar data
Procédé pour simuler des données de sonar

(30) Priorität: 15.03.2003 DE 10311497
(43) Veröffentlichungstag der Anmeldung: 22.09.2004
(73) Patentinhaber: ATLAS ELEKTRONIK GMBH, 28305 Bremen (DE)
(72) Erfinder: Rathjen, Dirk, 28357 Bremen (DE); Hölscher-Höbig, Ursula, 28207 Bremen (DE)
(74) Vertreter: Wasiljeff, Johannes M.B.

(56) Entgegenhaltungen:
- US-A- 6 096 085
- US-A1- 2003 013 069
- CAPERAN T ET AL: "A 3D SIMULATOR FOR THE DESIGN AND EVALUATION OF SONAR SYSTEM INSTRUMENTATION" MEASUREMENT SCIENCE AND TECHNOLOGY, IOP PUBLISHING, BRISTOL, GB, Bd. 10, Nr. 12, Dezember 1999 (1999-12), Seiten 1116-1126, XP000935528 ISSN: 0957-0233
- BELL J M: "APPLICATION OF OPTICAL RAY TRACING TECHNIQUES TO THE SIMULATION OF SONAR IMAGES" OPTICAL ENGINEERING, SOC. OF PHOTO-OPTICAL INSTRUMENTATION ENGINEERS. BELLINGHAM, US, Bd. 36, Nr. 6, 1. Juni 1997 (1997-06-01), Seiten 1806-1813, XP000693535 ISSN: 0091-3286
- GEORGE O ET AL: "UNIVERSAL HIGH RESOLUTION IMAGING SONAR SIMULATION TOOLKIT" ACOUSTICAL IMAGING. NANJING, SEPT. 12 - 14, 1992, PROCEEDINGS OF THE INTERNATIONAL SYMPOSIUM ON ACOUSTICAL IMAGING, NEW YORK, PLENUM PRESS, US, Bd. SYMP. 20, 12. September 1992 (1992-09-12), Seiten 765-772, XP000448681
- DANIEL S ET AL: "Underwater environment restitution through sonar images and swath bathymetry rendering" SYSTEMS, MAN, AND CYBERNETICS, 1998. 1998 IEEE INTERNATIONAL CONFERENCE ON SAN DIEGO, CA, USA 11-14 OCT. 1998, NEW YORK, NY, USA,IEEE, US, 11. Oktober 1998 (1998-10-11), Seiten 4417-4422, XP010311140 ISBN: 0-7803-4778-1
- RAO K V ET AL: "Element level simulation of sonar echo from a moving target in an ocean waveguide" OCEANS '94. 'OCEANS ENGINEERING FOR TODAY'S TECHNOLOGY AND TOMORROW'S PRESERVATION.' PROCEEDINGS BREST, FRANCE 13-16 SEPT. 1994, NEW YORK, NY, USA,IEEE, 13. September 1994 (1994-09-13), Seiten III-195-III-199, XP010125097 ISBN: 0-7803-2056-5

## Beschreibung

Die Erfindung betrifft ein Verfahren zur synthetischen Generierung von Sonardaten einer virtuellen Sonaranlage mit einer Unterwasser-Antenne, die zum richtungsselektiven Empfang von aus einem Seegebiet zurückgestreuter akustischer Energie einen Raumsektor des Seegebiets mit einer Mehrzahl von maximale Empfangsempfindlichkeit aufweisenden Empfangssektoren abtastet.

Zur Evaluierung von Auswertealgorithmen für Sonaranlagen, z.B. zur Detektion und Klassifikation von Zielen, werden eine Vielzahl von Sonardaten der Sonaranlagen benötigt. Die Aufzeichnung realer Daten, die den notwendigen Variantenreichtum besitzen, ist sehr aufwendig und teuer und häufig nicht durchführbar. Abhilfe schafft hier die Simulation von Sonardaten, d. h. die synthetische Erzeugung von Sonardaten.

Es sind verschiedene Simulationsverfahren bekannt, die aber alle unter unterschiedlichen Aspekten gewisse Mängel aufweisen. Bei der sog. High-Performance-Simulation werden sowohl die Umwelt (Wasser, Boden Objekte etc.), als auch die Antenne und die Auswerteelektronik der Sonaranlage vollständig und detailliert nachgebildet. Die Schallausbreitung ist kohärent und wird mit Kugelwellen beschrieben. Auch die Fahrzeugbewegung wird in die Simulation einbezogen, so dass Dopplereffekte berücksichtigt werden können. Diese Simulation liefert sehr präzise Ergebnisse, benötigt aber recht lange Rechenzeiten.

Bei der sog. Stimulations-Simulation für die Antenne bildet das Original-Sonargerät ohne Antenne die Basis für die Simulation. Anstelle der Antenne wird ein Datengenerator angeschlossen, der dem Auswertegerät die simulierten Stave-Daten der Antenne liefert. Diese Daten durchlaufen die Signalverarbeitung des Sonargeräts. Das Ergebnis wird auf dem Display des Sonargeräts dargestellt. Bei dieser Simulation werden nur wenige Objekte direkt nachgebildet und die Umgebung integral bzw. effektmäßig repräsentiert.

Bei der sog. Stimulations-Simulation für den Beamformer ist die Basis der Simulation das Original-Sonargerät ohne Antenne und ohne Richtungsbildner oder Beamformer. Anstelle dieser beiden Komponenten wird ein Datengenerator angeschlossen, der dem Auswertegerät die simulierten Beamformer-Daten liefert. Diese Daten durchlaufen die weitere Signalverarbeitung. Das Ergebnis wird auf dem Display dargestellt. Auch hier werden nur wenige Objekte direkt nachgebildet, und die Umgebung integral bzw. effektmäßig repräsentiert.

Ein bekanntes Sonarsimulationssystem (Capéran et al: "A 3D simulator for the design an evaluation of sonar system instrumentation", Measurement Science and Technology, IOP Publishing, Bristol, GB, Bad. 10, Nr. 12, Dezember 1999 (1999-12), Seite 1116 - 1126, XP00935528 ISSN: 0957-0233)simuliert den Sende/Empfänger, die Frontend-Elektronik, die Wellenausbreitung, die Zielsynthese und die Streuung am Ziel und im Medium. Die gewählte Methode zur Zielsynthese ist ähnlich der Methode, wie sie in Computergraphiken verwendet wird, wobei eine komplexe Szene durch Definition der einzelnen Objekte in einfache Formen, wie Kugel, Kegel, Zylinder, Obenfläche, Polynome und dgl., geschaffen wird. Bei der Echoberechnung wird das ray-tracing-Verfahren angewendet, um die Mehrfachreflexionen an Objekten zu erfassen.

Die gründliche Evaluierung von Auswertealgorithmen mit simulierten Sonardaten ist im akzeptierbaren, finanziellen Rahmen nur dann vertretbar, wenn die Simulation sehr schnell durchgeführt werden kann und realitätsgetreue oder -nahe Daten vielfältiger, detailliert modellierter Szenarien liefert; denn gerade im Umgang mit leicht unterschiedlichen Szenarien zeigen sich die Stärken oder Schwächen der Auswertealgorithmen. Geeignete Simulationsverfahren müssen daher Forderungen nach Schnelligkeit, Präzision, Variabilität, Detailreichtum und Ökonomie insgesamt erfüllen. Die vorstehend genannten bekannten Simulationsverfahren besitzen jeweils nur einige dieser Eigenschaften.

Aus der Simulation von visuellen Bildern einer virtuellen Umwelt, z.B. bei Computerspielen, sind jedoch Verfahren bekannt, die alle diese Forderungen erfüllen. Die Forderung nach Variabilität und Detailreichtum wird durch umfangreiche Datenbasen mit großer Funktionalität erfüllt. Schnelligkeit und Präzision werden durch Hochleistungsgrafikprozessoren (Grafikkarten) mit ebenfalls sehr hoher Funktionalität erreicht, die durch ihren Einsatz im kommerziellen Bereich besonders preiswert sind. Solche Grafikprozessoren liefern zwar keine Entfernungsinformationen, die notwendigerweise zur Simulation der Sonardaten erforderlich sind, jedoch werden intern Entfernungsinformationen verarbeitet, um z.B. Überdeckungen von Bildelementen zu berechnen.

Der Erfindung liegt die Aufgabe zugrunde, durch ein geeignetes Verfahren die bei der visuellen Simulation in Sichtsystemen eingesetzten Technologien auch bei der Sonarsimulation zu nutzen.

Die Aufgabe ist erfindungsgemäß durch die Merkmale im Anspruch 1 gelöst.

Das erfindungsgemäße Verfahren hat den Vorteil, dass die vorhandene, optimierte Sichtsystemtechnologie zur Erzeugung visueller Bilder einer virtuellen Umwelt in großem Umfang für die Sonarsimulation genutzt werden kann. Mit der Sichtsystemtechnologie kann eine "Unterwasserlandschaft" mit Objekten, z.B. Minen, und deren auf einen Augenpunkt bezogenes Aussehen leicht dargestellt werden. Da Sichtsysteme genau dafür konzipiert und optimiert sind, können sie dies besonders schnell und gut. Eine weitere Nutzung der Sichtsystemtechnologie für eine schnelle Sonarsimulation wird durch die Anwendung eines Schallstrahlmodells, das einer optischen Ausbreitung entspricht, anstelle der Modellierung einer Wellenausbreitung aus der Überlagerung von Kugelwellen, ermöglicht. Da in einem Empfangssektor oder Beam mehrere Echos empfangen werden können, die aus verschiedenen Richtungen innerhalb des Empfangssektors und aus verschiedenen Entfernungen kommen können, werden die Empfangssektoren oder Beams mit einer Vielzahl von mathematischen Schallstrahlen, d.h. Schallstrahlen mit punktförmigem Querschnitt, abgetastet. Jeder Schallstrahl wird in einer gewissen Entfernung an einem dort befindlichen Raumelement gestreut und so das Gesamtverhalten eines Beams mit mehreren Echos nachgebildet. Dadurch kann man die Technologie eines Sichtsystems mit dem Vorteil der schnellen Simulation nutzen; denn jedes Pixel entspricht einem Schallstrahl und die Intensität der Streuung eines Schallstrahls entspricht genau der Intensität eines Bildpunktes oder Pixels auf dem Bildschirm bei der Sichtsimulation. Der Empfangssektor oder Beam fasst dann die entsprechenden, in ihm liegenden Schallstrahlen zusammen.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Die Erfindung ist anhand eines in der Zeichnung illustrierten Ausführungsbeispiels im folgenden näher beschrieben. Es zeigen:
- Fig. 1: ein Blockschaltbild eines Sonarsimulators zur Erläuterung des Simulationsverfahrens,
- Fig. 2: ein Schallstrahlmodell für die Sonarsimulation in Seitenansicht,
- Fig. 3: das Schallstrahlmodell in Fig. 2 in Draufsicht,
- Fig. 4: ein Beispiel für eine modellierte Unterwasserlandschaft (Meeresboden mit darauf liegenden Objekten),
- Fig. 5 und 6: jeweils ein Beispiel eines mit Polygonen beschriebenen Objekts in der modellierten Unterwasserlandschaft in Fig. 4,
- Fig. 7: eine ϑ, ϕ, r-Matrix zur Illustrierung der hochauflösenden Abtastung eines Sektorsegments in einem einen Ausschnitt der Unterwasserlandschaft erfassenden Raumsektor,
- Fig. 8: eine ϑ, ϕ, r-Matrix zur Illustrierung der Verdichtung der Abtastwerte auf eine Sonarstruktur im Raumsektor,
- Fig. 9 und 10: ein vereinfachtes Beispiel einer zweidimensionalen r, (ϕ,-Matrix zur Erläuterung des Verdichtungsvorgangs.
- Fig. 11: vier Diagramme zur Illustration der Faltung eines Beamsignals mit der Richtcharakteristik der Empfangsantenne.

Mit dem nachstehend im einzelnen beschriebenen Simulationsverfahren werden synthetische Sonardaten einer Aktiv-Sonaranlage simuliert. Die Aktiv-Sonaranlage besitzt eine Unterwasser-Sendeantenne, über die ein Seegebiet mit akustischen Sendeimpulsen beschallt wird, und eine Unterwasser-Empfangsantenne mit Richtwirkung, die über eine Mehrzahl von Empfangssektoren mit maximaler Empfangsempfindlichkeit, auch als Hauptkeule der Richtcharakteristiken der Empfangsantenne bezeichnet und im folgenden Beams 11 genannt, aus dem beschallten Seegebiet zurückgestreute akustische Energie empfängt. Jeder Empfangssektor oder Beam 11 ist durch einen vertikalen und einen horizontalen Öffnungswinkel definiert. Die aneinander angrenzenden, räumlichen Empfangssektoren oder Beams 11 sind mit ihrer Hauptachse um gleiche Winkel gegeneinander versetzt und tasten einen durch einen vertikalen und horizontalen Öffnungswinkel beschriebenen Raumsektor des Seegebiets akustisch ab. In Einzelfällen können Sende- und Empfangsantenne mit einer einzigen Unterwasser-Antenne realisiert werden.

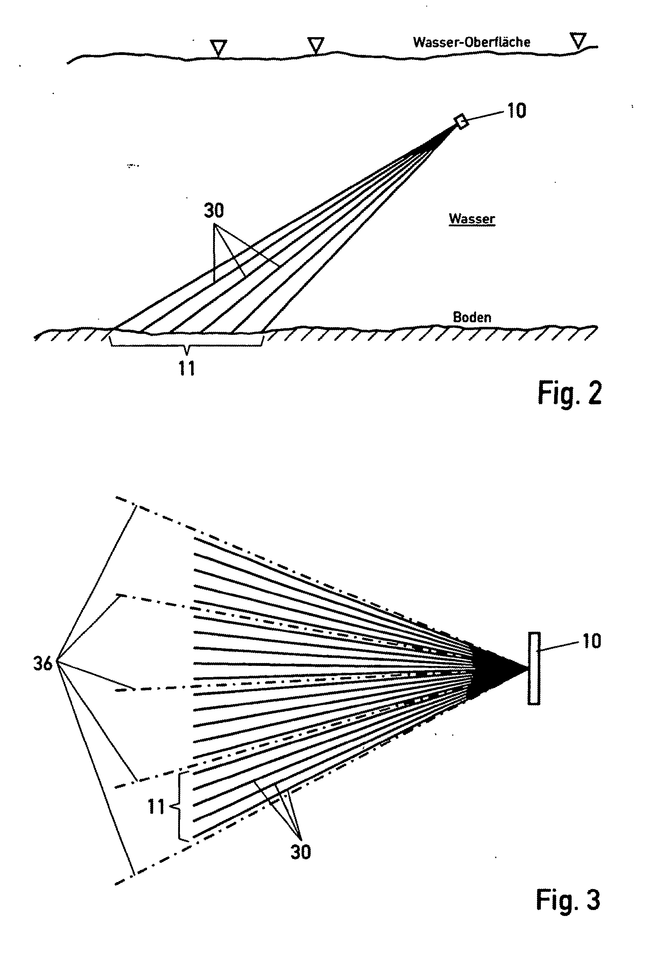

In Fig. 2 und 3 ist beispielhaft eine lineare Empfangsantenne 10 mit vier Beams 11 in Seitenansicht (Fig. 2) und Draufsicht (Fig. 3) schematisch dargestellt. Die Beams 11 liegen in Horizontalrichtung lückenlos aneinander. Die den Öffnungswinkel des Beams 11 in Horizontalrichtung festlegenden Beamgrenzen sind in Fig. 3 mit 36 gekennzeichnet. Eine realitätsgetreue Antenne hat beispielsweise 128 Beams mit einem horizontalen Öffnungswinkel von 0,2° und einem vertikalen Öffnungswinkel von 15°, so dass von der Empfangsantenne insgesamt ein Raumsektor von 25,6° horizontal und 15° vertikal erfasst wird.

Die von einer solchen Aktiv-Sonaranlage gelieferten Sonardaten, und zwar Position und akustische Streuintensität von Flächen und Objekten im Seegebiet, die von einem Sendeimpuls akustisch "beleuchtet" werden und akustische Energie zurückstreuen, werden nach folgendem Verfahren simuliert, d.h. synthetisch für eine vorgegebene virtuelle Unterwasserwelt oder -landschaft generiert:

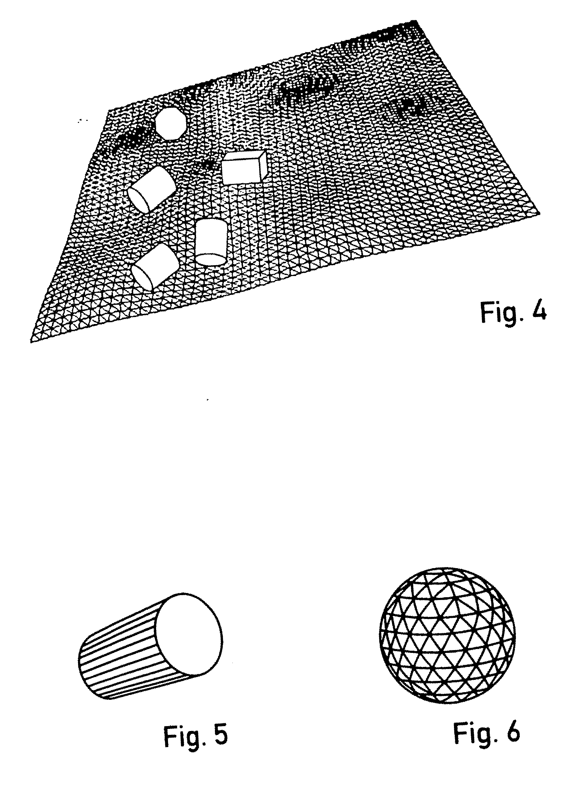

Eine virtuelle Unterwasserwelt eines Seegebiets, die topographische Details und darin vorhandene Objekte, z.B. Minen, Steine etc., enthält, wird bezüglich ihrer akustischen Eigenschaften in Form von Polygonen beschrieben und in einer akustischen Datenbasis 12 abgespeichert. Diese Datenbasis 12 enthält Informationen, wie statisches Grundgelände (Seeboden, statistische Beschreibung der Wasseroberfläche,) statische Objekte (Steine, Minen etc.), Sediment (als Volumenmodell oder geschichtet), dynamische Features (Fahrzeuge, Fische), akustische Texturen, Effekte (Blasen, Kielwasser), Strukturelemente und akustische Materialeigenschaften, nämlich Streukoeffizienten. Fig. 4 zeigt eine beispielhaft modulierte Unterwasserlandschaft, die ein Meeresbodengebiet von 1,24 x 0,55 km² sowie auf dem Meeresboden liegende, verschiedene Objekte umfasst. Dies ist eine typische Unterwasserlandschaft für ein Sonar zur Detektion von Seeminen. Sowohl der Meeresboden als auch die Objekte sind als Polygone beschrieben. Die Beschreibung eines Kugel-Objekts und eines Zylinder-Objekts mit Polygonen ist in Fig. 5 und 6 illustriert. Zur Berücksichtigung von Dämpfung im Boden des Seegebiets und Nachhall, die bei der Schallausbreitung im Wasser auftreten, werden entsprechende Sedimentschichten im Boden und Inhomogenitäten im Wasser durch semitransparente Polygone beschrieben.

Aufgrund einer vorgegebenen Position und Orientierung der Empfangsantennen 10 im Seegebiet, wird ein von der Gesamtheit der Beams 11, auch Beamfächer genannt, erfasster Ausschnitt (Szene) der Unterwasserwelt, der dem von der Empfangsantenne 10 mit ihrem Beamfächer erfassten Raumsektor entspricht, festgelegt.

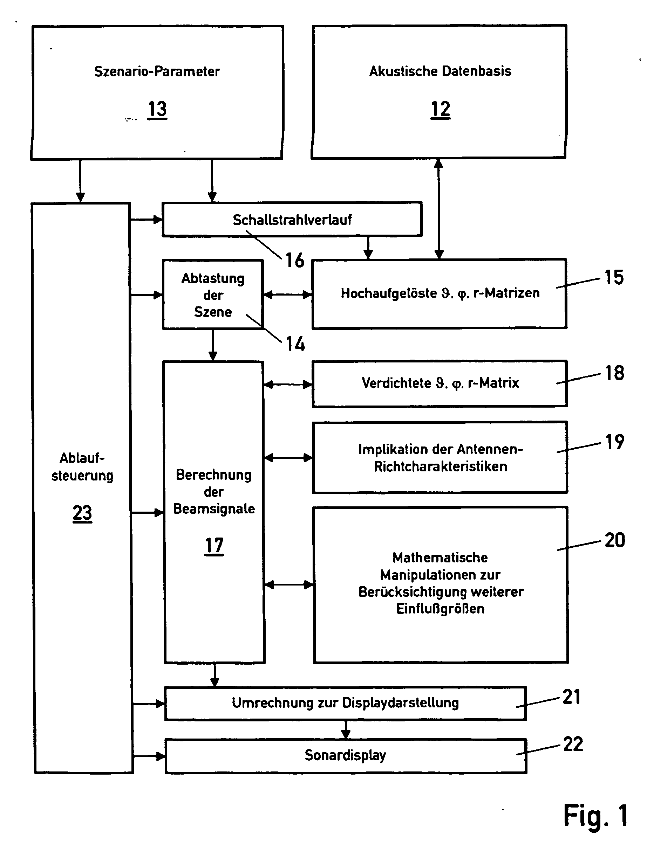

Zur hochauflösenden Abtastung dieses Ausschnitts der Unterwasserwelt mit Sichtsystemtechnologie (Block 14 in Fig. 1) wird ein Schallstrahlmodell eingeführt, indem in jedem Raumsektor eine Vielzahl von Schallstrahlen 30 definiert wird, die in ihrer Gesamtheit den Raumsektor mit einer gewünschten lokalen Auflösung fein und vollständig abtasten. Um die Sichtsystemtechnologie einsetzen zu können, muss eine Anpassung der Schallstrahlenzahl an die in einem Sichtsystem verfügbaren Bildformate vorgenommen werden; denn jeder Schallstrahl entspricht einem Bildpunkt oder Pixel im gewünschten Bildformat des Sichtsystems, und somit ist die Zahl der Schallstrahlen durch das Bildformat vorgegeben. Durch die vom Bildformat festgelegte Schallstrahlenzahl und durch eine gewünschte lokale Winkelauflösung der Szene ist die Größe eines Sektorsegments des Raumsektors festgelegt, das in der noch nachstehend beschriebenen Weise bearbeitet wird. Je höher die Winkelauflösung in Vertikal- oder Horizontalrichtung sein soll, desto kleiner ist der jeweils konstante Winkelabstand der Schallstrahlen voneinander in vertikaler Richtung oder in horizontaler Richtung und desto kleiner ist die vertikale oder horizontale Abmessung des mit der Schallstrahlenzahl erfassten Sektorsegments. Die so einzeln erfassten Sektorsegmente ergeben in ihrer Gesamtheit den Raumsektor, der den Ausschnitt der vertikalen Unterwasserwelt entsprechend der Lage und Ausrichtung der Empfangsantenne 10 bestimmt. Das lagerichtige Aneinanderfügen der Sektorsegmente erfolgt dabei lückenlos und überlappungsfrei.

In Fig. 2 und 3 sind beispielhaft sechs Schallstrahlen 30 vertikal und fünf Schallstrahlen 30 horizontal pro Beam 11 dargestellt, so dass ein Empfangssektor mit insgesamt dreißig Schallstrahlen 30 abgetastet wird. Wird bei dem als Beispiel vorgestellten Minendetektionssonar mit einer Reichweite der Empfangsantenne 10 von z.B. 400 m in maximaler Entfernung eine Auflösung von jeweils 10 cm horizontal und vertikal in einer senkrecht zu den Schallstrahlen 30 ausgerichteten Ebene gefordert, so beträgt die Winkelauflösung, d.h. der Winkelabstand der Schallstrahlen 30 voneinander, 0,014° jeweils in Horizontal- und Vertikalrichtung. Jeder Beam 11 hat damit 14 Strahlen in Horizontalrichtung und 1072 Strahlen in Vertikalrichtung, so dass sich bei 128 Beams 11 in Horizontalrichtung eine Anzahl von 1792 x 1072 Schallstrahlen 30 ergibt. Würde ein Bildformat des Sichtsystems mit mindestens dieser Anzahl von Pixeln jeweils in Horizontal- und Vertikalrichtung verfügbar sein, so könnte die Aufteilung des Raumsektors in Sektorsegmente unterbleiben und der gesamte Raumsektor vollständig mit der gewünschten Auflösung erfasst werden. Andernfalls ist die zuvor beschriebene Unterteilung des Raumsektors in die einzelnen Sektorsegmente vorzunehmen, wobei die gewählte Winkelauflösung von Sektorsegment zu Sektorsegment verschieden sein kann. Innerhalb eines Sektorsegments ist die Winkelauflösung konstant, d.h. alle Schallstrahlen 30 haben in Horizontalrichtung und in Vertikalrichtung einen jeweils konstanten Winkelabstand, der in Horizontalrichtung und Vertikalrichtung gleich oder verschieden sein kann.

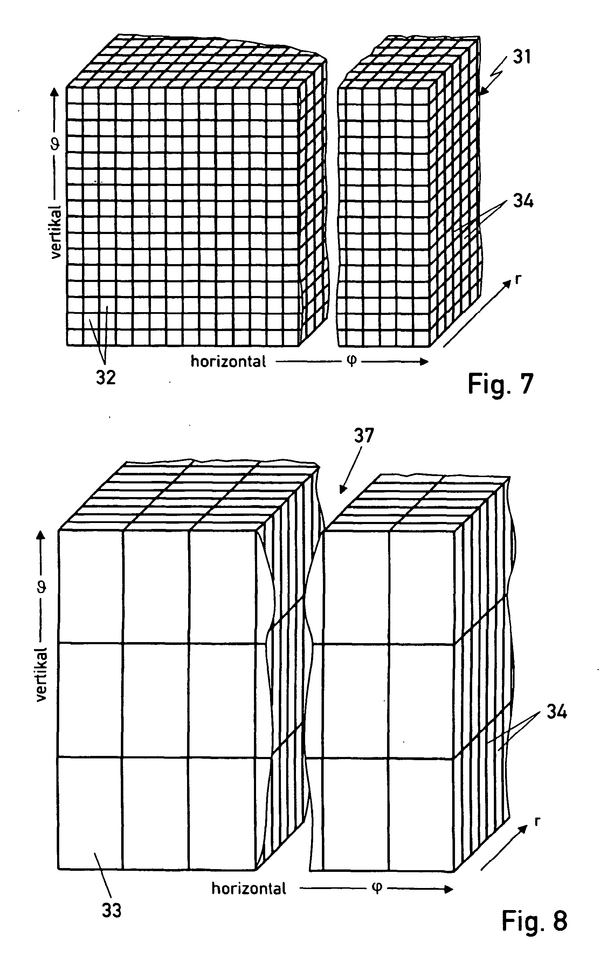

Die Schallstrahlen 30 sind durch die Winkelkoordinaten eines zweidimensionalen kartesischen Rasterfelds 32 definiert, wie dieses in der in Fig. 7 dargestellten dreidimensionalen Matrix 31 zu sehen ist, auf dessen einer Koordinate Horizontalwinkel ϕ und auf dessen anderer Koordinate Vertikalwinkel ϑ abgetragen sind. Die Größe des Rasterfelds 32 ist durch den vertikalen und horizontalen Öffnungswinkel des jeweiligen Sektorsegments und die Rasterung, d.h. die Größe der Winkelintervalle, durch die lokale Winkelauflösung im Sektorsegment, d.h. durch den konstanten Winkelabstand der Schallstrahlen 30 vertikal und horizontal, festgelegt.

Die Schallstrahlen 30 werden im vereinfachten Fall als geradlinig angenommen. Im Wasser werden jedoch die Schallstrahlen 30 durch in der Tiefe unterschiedliche akustischen Eigenschaften gebeugt. Die Wassersäule wird mit Wasserschichten beschrieben, die unterschiedliche Schallgeschwindigkeiten besitzen (Veloprofil). Bei nicht konstantem Veloprofil, also von Wasserschicht zu Wasserschicht sich ändernder Schallgeschwindigkeit, ist für eine exakte Simulation die Berücksichtigung des durch die Wasserschichten gekrümmten Schallstrahlverlaufs nötig, was mittels eines geeigneten Rechenprogramms im Block 16 der Fig. 1 durchgeführt wird. Beispielsweise kann dies durch eine geeignet berechnete Verzerrung (Deformation) des aus der Datenbasis entnommenen Ausschnitts der Unterwasserwelt erreicht werden.

Für jeden so festgelegten Schallstrahl 30 wird die akustische Streuintensität I des von einem Sendeimpuls mit akustischer Energie "beleuchteten" Polygons, das von dem von der Empfangsantenne 10 ausgehenden, durch sein Rasterfeld 32 im kartesischen Raster hindurchtretenden jeweiligen Schallstrahl 30 getroffen wird, auf Basis des dem Polygon zugeschriebenen Streukoeffizienten bestimmt (Block 15 in Fig. 1). Zusätzlich wird für jeden Schallstrahl 30 die Entfernung des von ihm getroffenen Polygons von der Empfangsantenne 10 berechnet. Sind in Schallstrahlrichtung semitransparente Polygone vorhanden, wie sie eingangs in Verbindung mit der Datenbasis beschrieben worden sind, so kann der Schallstrahl 30 auch mehr als ein Polygon treffen. In diesem Fall ergeben sich mehrere Streuintensitäten in unterschiedlicher Entfernung für denselben, durch seine ϑ, ϕ-Koordinaten des Rasterfelds 32 definierten Schallstrahl 30. Für jeden Schallstrahl 30 wird die Streuintensität I, bzw. werden die Streuintensitäten I, in Zuordnung zu einem durch die Koordinaten ϑ und ϕ des Schallstrahls 30 festgelegten Rasterfeld 32 und dem Entfernungswert r, bzw. den Entfernungswerten r, abgespeichert. Für jedes Sektorsegment im Raumsektor entsteht so die in Fig. 7 schematisch dargestellte dreidimensionale ϑ, ϕ, r-Matrix 31 mit den Rasterfeldern 32 und Entfernungszellen 34, in die die Streuintensitäten I eingetragen werden (Block 15 in Fig. 1). Diese Matrix 31 ist relativ dünn besetzt, da für jede ϑ, ϕ-Kombination (Rasterfeld 32) nur eine Entfernungszelle 34 bzw. nur wenige Entfernungszellen 24 einen von Null abweichenden Wert der Streuintensität I besitzt bzw. besitzen. Die einzelnen Matrizen 31 der Sektorsegmente haben je nach gewählter Auflösung im Raumsektor eine gleiche oder unterschiedliche ϑ,ϕ-Rasterung, doch schließen sich die Winkelbereiche der Matrizen 31 entsprechend der Lage benachbarter Sektorsegmente im Raumsektor nahtlos aneinander an. Deckt z.B. ein Sektorsegment in Horizontalrichtung den Winkelbereich 0° - 5° des horizontalen Öffnungswinkels des Raumsektors und ein angrenzendes zweites Sektorsegment einen Winkelbereich von 5° - 12° horizontal ab, so erstreckt sich das Rasterfeld 32 der Matrix 31 des ersten Sektorsegments von 0° bis 5° horizontal und das Rasterfeld 32 der Matrix 31 des zweiten Sektorsegments von 5° bis 12° horizontal mit einer gröberen Rasterung.

Die durch die hochauflösende Abtastung wie beschrieben gewonnenen Daten, nämlich Position (ϑ, ϕ, r) und Streuintensität I aller akustischen Streuzentren im Raumsektor werden nunmehr in die Beamsignale umgewandelt (Block 17 in Fig. 1). Hierzu werden zunächst die mit der Sichtsystemtechnologie gewonnenen, in den Matrizen 31 der Sektorsegmente abgespeicherten Daten in die Sonardatenstruktur verdichtet (Block 18 in Fig. 1). Für die Verdichtung wird eine neues, gröber diskretisiertes Rasterfeld 33 definiert, dessen Winkelkoordinaten ϑ, ϕ so diskretisiert sind, dass die Diskretisierung der Winkelbreite, d.h. dem vertikalen und horizontalen Öffnungswinkel, der Beams 11 im Raumsektor entspricht. Jeweils zwei Winkelkoordinaten ϑ und ϕ in Vertikal- und Horizontalrichtung legen die Beamgrenzen 36 der Beams 11 fest. Die Rasterung des Rasterfelds 33 entspricht in Vertikalrichtung dem vertikalen Öffnungswinkel der Beams 11 und in Horizontalrichtung dem horizontalen Öffnungswinkel der Beams 11. Dieses Rasterfeld 33 bildet zusammen mit der unverändert gerasterten Entfernungskoordinate mit den Entfernungszellen 34 eine neue ϑ, ϕ, r-Matrix 37 (Fig. 8), die jetzt entsprechend den Öffnungswinkeln ϑ und ϕ der Beams 11 viel gröber diskretisiert und damit von kleinerem Umfang ist. Diese zweite Matrix 37 überdeckt den gesamten, den Ausschnitt der Unterwasserwelt erfassenden Raumsektor. Nunmehr wird festgestellt, welche Schallstrahlen 30 in den Matrizen 31 zu welchen Beams 11 gehören, und alle Streuintensitäten I dieser Schallstrahlen 30 werden in Zuordnung zu den Beams 11 und mit den zugehörigen Entfernungswerten r in die zweite Matrix 37 eingespeichert. Innerhalb eines Beams 11 unter gleichem Entfernungswert r abgespeicherte Intensitäten I werden dabei unter Berücksichtigung von Normierungsfaktoren addiert.

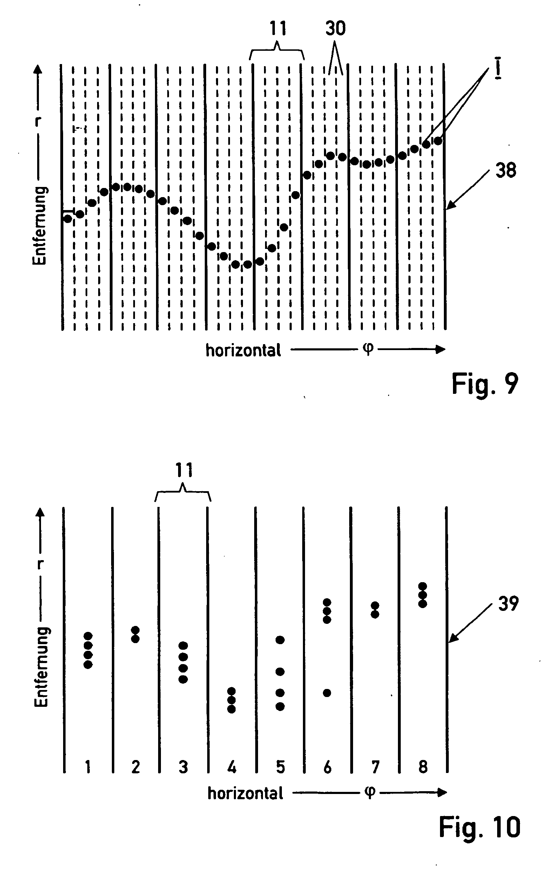

In dem eingangs vorgestellten Ausführungsbeispiel einer Linearantenne mit 128 Beams 11 mit jeweils einer Beambreite oder einem Öffnungswinkel von 0,2° horizontal und einer Beambreite oder einem Öffnungswinkel von 15° vertikal entfällt bei der Zusammenfassung der Schallstrahlen 30 zu den Beams 11 der ϑ-Bereich, da jeweils alle 14 x 1072 Schallstrahlen 30 des ϑ-Bereichs zu einem der 128 horizontal nebeneinanderliegenden Beams 11 gehören. In Fig. 9 und 10 ist der Vorgang der Datenverdichtung zur besseren Verständlichkeit vereinfacht illustriert, wobei angenommen ist, dass für jeden Schallstrahl 30 nur eine Streuintensität I, die in Fig. 9 und 10 durch einen Punkt symbolisiert ist, mit einem Entfernungswert r auftritt. Vereinfacht sind insgesamt vier Schallstrahlen 30 (nur in Horizontalrichtung) pro Beam 11 angenommen. Es ergibt sich hierbei anstelle der dreidimensionalen ϑ, ϕ, r-Matrix 31 eine nur zweidimensionale ϕ,r-Matrix 38 (Fig. 9), und anstelle der gröber diskretisierten, zweiten ϑ, ϕ, r-Matrix 37 eine nur zweidimensionale ϕ, r-Matrix 39 (Fig. 10), bei der noch eine Beamnumerierung 1, 2, 3.... vorgenommen ist. Die innerhalb eines Beams 11 erfolgende Zusammenfassung aller Streuintensitäten I und die Aufsummierung aller Streuintensitäten I, denen ein gleicher Entfernungswert r zugehörig ist, führt zu einer reduzierten Winkelauflösung der Szene, wie sie mit dem vorgegebenen Beamfächer einer realen Sonaranlage erreicht werden würde. Die Zusammenfassung der Streuintensitäten I zu den einzelnen Beams 11 und die dabei erfolgende Aufsummierung der Streuintensitäten I mit gleichem Entfernungswert r ist in Fig. 10 für die Beams Nr. 1 - 8 dargestellt. Entsprechend der nur der Übersichtlichkeit halber beispielhaft gewählten horizontalen Abtastung mit vier Schallstrahlen 30 pro Beam 11 sind in jedem Beam 11 maximal vier Streuintensitäten I in verschiedenen Entfernungszellen vorhanden, unter der Voraussetzung, dass ein Schallstrahl 30 nur ein Polygon trifft. Im Beam Nr. 2 und Nr. 7 liegen diese Streuintensitäten I entfernungsmäßig sehr dicht beieinander, im Beam Nr. 4 und Beam Nr. 6 sind jeweils zwei Intensitäten I mit gleichem Entfernungswert r aufsummiert worden. Aus jedem Beam 11 können nunmehr die Sonardaten ausgelesen werden, nämlich der Entfernungswert r und die Intensität I von mit der Empfangsantenne 10 erfassten Streuzentren im Seegebiet. Die Winkelkoordinate ϕ der Hauptachse des Beams 11 ergibt die Peilung. Die einem Beam 11 entnommenen Sonardaten werden im folgenden als Beamsignal bezeichnet.

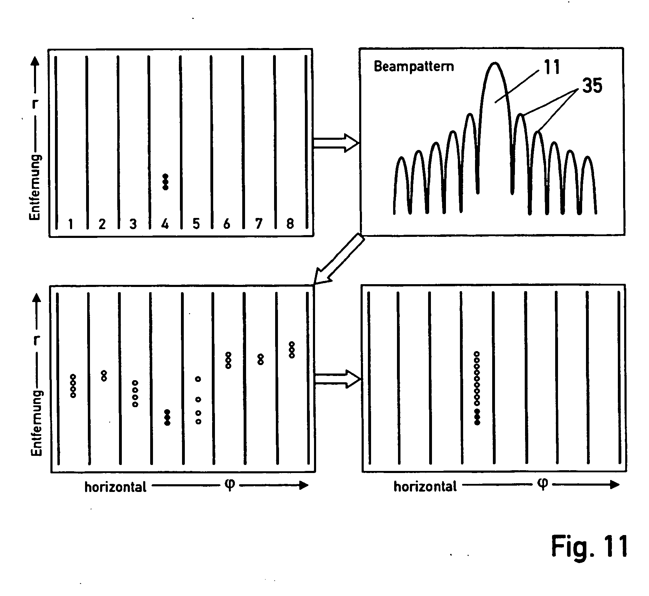

Zur Verbesserung der Simulation der Sonardaten werden bei der Berechnung der Beamsignale noch verschiedene Einflussgrößen berücksichtigt. Zunächst wird in Block 19 der Einfluss der Richtwirkung der Antennen auf die Sonardaten berücksichtigt. Dieses geschieht multiplikativ für die Richtwirkung der Sendeantenne und durch Faltung für die Richtwirkung der Empfangsantenne. In Fig. 11 ist das Prinzip der Faltungsoperation für das Beamsignal aus Beam Nr. 4 in Fig. 10, das drei Streuintensitäten I in unterschiedlichen Entfernungen umfasst, illustriert. Hier wird das im oberen linken Diagramm der Fig. 11 dargestellte Beamsignal mit der im oberen rechten Diagramm der Fig. 11 dargestellten Richtfunktion oder Richtcharakteristik (Beampattern) der Empfangsantenne 10 gefaltet. Das Ergebnis der Faltungsoperation ist für Beam Nr. 4 im unteren rechten Diagramm der Fig. 11 dargestellt. Deutlich ist zu erkennen, dass die über Nebenzipfel 35 der Richtcharakteristik im Beam Nr. 4 aus anderen Richtungen (im Beispiel der Fig. 11 aus durch die Beams Nr. 1 - 3 und 5 - 8 erfassten Richtungen) empfangenen Streuintensitäten (unteres linkes Diagramm der Fig. 11) nunmehr mit entsprechend der Nebenzipfeldämpfung der Richtcharakteristik geringeren Intensitätswerten berücksichtigt sind, so dass das Beamsignal realitätsgetreuer simuliert ist. In Fig. 11 sind die Intensitäten I, die im Beam Nr. 4 mehr oder weniger stark gedämpft empfangen werden, durch kleine Kreise dargestellt, um sie von den Vollpunkten, die die im Beam Nr. 4 direkt empfangenen Intensitäten I darstellen, zu unterscheiden. Die Faltung bzw. Multiplikation wird für jeden Entfernungswert r in jedem Beam 11 durchgeführt. Eine gleiche Faltungsoperation bzw. Multiplikation wird auch auf die Vertikalrichtung angewendet. Es ist sinnvoll diese Operationen nicht mit den Beams 11, sondern bereits mit den feinauflösenden Schallstrahlen 31 durchzuführen, also noch vor Verdichtung der Daten aus Block 15 in die Sonardatenstruktur gemäß Block 18.

Neben der Implikation der Antennen-Richtcharakteristiken werden im Block 20 noch weitere mathematische Manipulationen vorgenommen, um bei der Berechnung der Beamsignale im Block 17 weitere Einflussgrößen zu berücksichtigen, so die Impulsformen von an den Streuzentren zurückgestreuten Sendeimpulsen, Rauschgrößen, wie Boden-, Oberflächen- und Volumennachhall, Umgebungsgeräusche, Eigenstörpegel und Ausbreitungsdämpfung.

Die so simulierten Beamsignale werden im Block 21 für die Darstellung auf einem Display 22 umgerechnet und auf dem Display 22 dargestellt. Der gesamte Verfahrensablauf wird von einer Ablaufsteuerung 23 gesteuert.

## Patentansprüche

1. Verfahren zur synthetischen Generierung von Sonardaten einer virtuellen Aktiv-Sonaranlage mit einer Unterwasser-Empfangsantenne (10), die zum richtungsselektiven Empfang von aus einem mit akustischen Sendeimpulsen beschallten Seegebiet zurückgestreuter akustischer Energie einen durch einen vertikalen und horizontalen Öffnungswinkel beschriebenen Raumsektor mit einer Mehrzahl von maximale Empfangsempfindlichkeit aufweisenden durch jeweils einen vertikalen und horizontalen Öffnungswinkel beschriebenen Empfangssektoren (11) erfasst, mit folgenden Verfahrensschritten:
- eine virtuelle Unterwasserwelt des Seegebiets wird bezüglich seiner akustischen Eigenschaften in Form von Polygonen beschrieben und in einer akustischen Datenbasis (12) abgelegt,
- anhand der Position und Orientierung der Empfangsantenne (10) im Seegebiet wird ein dem von der Empfangsantenne (10) erfassten Raumsektor entsprechender Ausschnitt der Unterwasserwelt festgelegt,
- im Raumsektor wird eine Vielzahl von Schallstrahlen (30) definiert, die durch Winkelkoordinaten eines Horizontalwinkels (ϕ) und eines Vertikalwinkels (9) bestimmt sind,
- für jedes im Ausschnitt der Unterwasserwelt von einem Schallstrahl (30) getroffene Polygon wird eine dem Polygon eigene Streuintensität (I) und eine Entfernung des Polygons von der Empfangsantenne (10) mit einem in diskreten Entfernungsintervallen festgelegten Entfernungswert (r) bestimmt,
- die Streuintensitäten (I) werden in Zuordnung zu den zugehörigen Entfernungswerten (r) unter den Winkelkoordinaten (ϑ, ϕ) der Schallstrahlen (30) in einem ersten kartesischen Raster (32) abgespeichert,
- es wird ein gröberes zweites kartesisches Raster (33) gebildet, dessen Winkelkoordinaten (ϑ, ϕ) in der Weise diskretisiert sind, dass die Breite der Winkelinkremente dem vertikalen bzw. horizontalen Öffnungswinkel eines Empfangssektors (11) entspricht, und
- in das zweite Raster (33) werden alle gespeicherten Streuintensitäten (I) in Zuordnung zu den zugehörigen Entfernungswerten (r) entsprechend ihren Winkelkoordinaten unter den entsprechenden Empfangssektoren (11) eingeschrieben und dabei Streuintensitäten (I), denen innerhalb eines Empfangssektors (11) gleiche Entfernungswerte (r) zugehörig sind, aufaddiert.

2. Verfahren nach Anspruch 1, **dadurch gekennzeichnet, dass** aus dem ersten Raster (32) mit den vertikalen und horizontalen Winkelkoordinaten (ϑ, ϕ) der Schallstrahlen (30) und einer gerasterten Entfernungskoordinate eine erste dreidimensionale ϑ, ϕ r-Matrix (31) gebildet wird, in der die Abspeicherung der pro Schallstrahl (30) bestimmten Streuintensitäten (I) und Entfernungswerte (r) vorgenommen wird, und dass aus dem zweiten Raster (33) mit den vertikalen und horizontalen Winkelkoordinaten (ϑ, ϕ) der Empfangssektoren (11) und der gleichen Entfernungskoordinate eine zweite dreidimensionale ϑ, ϕ, r-Matrix (37) gebildet wird, in die das Einschreiben der Streuintensitäten (I) und Entfernungswerte (r) pro Empfangssektor (11) vorgenommen wird.

3. Verfahren nach Anspruch 1 oder 2, **dadurch gekennzeichnet, dass** eine Anzahl von Schallstrahlen (30) mit einem vertikalen und einem horizontalen, jeweils konstanten Winkelabstand voneinander entsprechend einer in einem Sektorsegment des Raumsektors gewünschten lokalen Winkelauflösung festgelegt und die Anzahl der Schallstrahlen (30) an ein Bildformat eines Sichtsystems so angepasst wird, dass jeweils ein Schallstrahl (30) einem Pixel (Bildpunkt) im Bildformat entspricht, und dass die Sektorsegmente zu dem Raumsektor, vorzugsweise lückenlos und überlappungsfrei, zusammengesetzt werden.

4. Verfahren nach Anspruch 3, **dadurch gekennzeichnet, dass** in die erste ϑ, ϕ, r-Matrix (31) alle in einem Sektorsegment des Raumsektors erfassten Intensitäten (I) und zugehörigen Entfernungswerte (r) eingeschrieben und die Matrixgrenzen in Vertikal- und Horizontalrichtung durch die vertikalen und horizontalen Winkelkoordinaten der Sektorsegmentgrenzen im Raumsektor und die vertikale und horizontale Rasterung der ϑ, ϕ, r-Matrix (31) durch die vertikalen und horizontalen Winkelabstände der Schallstrahlen (30) im Sektorsegment festgelegt werden.

5. Verfahren nach Anspruch 3 oder 4, **dadurch gekennzeichnet, dass** die vertikalen und horizontalen Matrixgrenzen der zweiten ϑ, ϕ, r-Matrix (37) durch den vertikalen und horizontalen Öffnungswinkel des Raumsektors festgelegt werden.

6. Verfahren nach einem der Ansprüche 1 - 5, **dadurch gekennzeichnet, dass** zur Berücksichtigung von Antenneneigenschaften die räumliche Verteilung der pro Schallstrahl (30) oder Empfangssektor (11) bestimmten Streuintensitäten (I) mit der Richtcharakteristik der Empfangsantenne (10) gefaltet und/oder mit der Richtcharakteristik einer die akustischen Sendeimpulse abstrahlenden Sendeantenne multipliziert wird.

7. Verfahren nach einem der Ansprüche 1 - 6, **dadurch gekennzeichnet, dass** die in jedem Empfangssektor (11) generierten Sonardaten zur Berücksichtigung von Impulsformen, Rauschgrößen und Ausbreitungsdämpfung mathematisch manipuliert werden.

8. Verfahren nach einem der Ansprüche 1 - 7, **dadurch gekennzeichnet, dass** die pro Empfangssektor (11) generierten Sonardaten für eine Displaydarstellung umgerechnet werden.

## Claims

1. Method for synthetic generation of sonar data of a virtual active sonar installation having an underwater receiving antenna (10) which, for directionally selective reception of acoustic energy which is scattered back from a sea area which is ensonified with acoustic transmitted pulses, detects a spatial sector, which is described by a vertical and a horizontal beam angle and has a plurality of receiving sectors (11) which have maximum reception sensitivity and are described by in each case one vertical and one horizontal beam angle, having the following method steps:
- a virtual underwater world of the sea area is described with respect to its acoustic characteristics in the form of polygons and is stored in an acoustic database (12),
- a section of the underwater world which corresponds to the spatial sector detected by the receiving antenna is defined on the basis of the position and orientation of the receiving antenna (10) in the sea area,
- a multiplicity of sound beams (30) are defined in the spatial sector, which are defined by angle coordinates of a horizontal angle (ϕ) and of a vertical angle (θ),
- a scatter intensity (I) which is specific to the polygon and a range of the polygon from the receiving antenna (10) with a range value (r) which is defined in discrete range intervals are defined for each polygon on which the sound beam (30) is incident in the section of the underwater world,
- the scatter intensities (I) are stored associated with the associated range values (r) together with the angle coordinates (θ, ϕ) of the sound beams (30) in a first Cartesian grid (32),
- a coarser second Cartesian grid (33) is formed, whose angle coordinates (θ, ϕ) are quantized in such a way that the width of the angle increments corresponds respectively to the vertical and horizontal beam angles of a receiving sector (11), and
- all the stored scatter intensities (I), associated with the associated range values (r) corresponding to their angle coordinates within the corresponding receiving sectors (11) are written in the second grid (33) and, in the process, scatter intensities (I) with which the same range values (r) are associated within a receiving sector (11) are added up.

2. Method according to Claim 1, **characterized in that** a first three-dimensional θ, ϕ, r matrix (31) is formed from the first grid (32) with the vertical and horizontal angle coordinates (θ, ϕ) of the sound beams (30) and a range coordinate in the form of a grid, in which matrix (31) the scatter intensities (I) and range values (r) defined for each sound beam (30) are stored, and **in that** a second three-dimensional θ, ϕ, r- matrix (37) is formed from the second grid (33) with the vertical and horizontal angle coordinates (θ, ϕ) of the receiving sectors (11) and with the same range coordinates, in which matrix (37) the scatter intensities (I) and range values (r) for each receiving sector (11) are written.

3. Method according to Claim 1 or 2, **characterized in that** a number of sound beams (30) with a vertical and a horizontal, respectively constant, angle separation from one another are defined corresponding to a local angle resolution which is desired in a sector segment of the spatial sector, and the number of sound beams (30) is matched to an image format of a viewing system such that one sound beam (30) in each case corresponds to one pixel (image point) in the image format, and such that the sector segments are combined to form the spatial sector, preferably without any gaps and without any overlap.

4. Method according to Claim 3, **characterized in that** all of the intensities (I) and associated range values (r) which are detected in a sector segment of the spatial sector are written into the first θ, ϕ, r-matrix (31), and the matrix boundaries in the vertical and horizontal directions are defined by the vertical and horizontal angle coordinates of the sector segment boundaries in the spatial sector and the vertical and horizontal grid of the θ, ϕ, r-matrix (31) is defined by the vertical and horizontal angle separations between the sound beams (30) in the sector segment.

5. Method according to Claim 3 or 4, **characterized in that** the vertical and horizontal matrix boundaries of the second θ, ϕ, r-matrix (37) are defined by the vertical and horizontal beam angles of the spatial sector.

6. Method according to one of Claims 1-5, **characterized in that**, in order to take account of antenna characteristics, the spatial distribution of the scatter intensities (I) determined for each sound beam (30) or receiving sector (11) is convolved with the direction characteristic of the receiving antenna (10) and/or is multiplied by the direction characteristic of a transmitting antenna which emits the acoustic transmitted pulses.

7. Method according to one of Claims 1-6, **characterized in that** the sonar data which is generated in each receiving sector (11) is mathematically manipulated, taking into account pulse forms, noise variables and propagation loss.

8. Method according to one of Claims 1-7, **characterized in that** the sonar data which is generated for each receiving sector (11) is converted for a display representation.

## Revendications

1. Procédé de génération synthétique de données de sonar d'un équipement à sonar actif virtuel comprenant une antenne réceptrice sous-marine (10) qui, pour la réception à sélectivité de direction de l'énergie acoustique rétrodiffusée depuis un secteur maritime exposé à des impulsions acoustiques émises, acquiert un secteur d'espace décrit par un angle d'ouverture vertical et horizontal comprenant une pluralité de secteurs de réception (11) présentant une sensibilité de réception maximale et décrivant respectivement un angle d'ouverture vertical et horizontal, comprenant les étapes suivantes :
- un monde sous-marin virtuel du secteur maritime est décrit du point de vue de ses caractéristiques acoustiques sous la forme de polygones puis enregistré dans une base de données acoustique (12),
- une section du monde sous-marin correspondant au secteur d'espace acquis par l'antenne réceptrice (10) est déterminée au moyen de la position et de l'orientation dé l'antenne réceptrice (10),
- dans le secteur d'espace est définie une pluralité de rayons sonores (30) qui sont définis par les coordonnées angulaires d'un angle horizontal (ϕ) et d'un angle vertical (ϑ),
- une intensité de diffusion (I) propre au polygone et une distance du polygone par rapport à l'antenne réceptrice (10) avec une valeur de la distance (r) définie dans des intervalles de distance discrets sont déterminées pour chaque polygone atteint par un rayon sonore (30) dans la section du monde sous-marin,
- les intensités de diffusion (I) sont enregistrées dans une première grille cartésienne (32) en association avec les valeurs de distance (r) correspondantes sous les coordonnées angulaires (ϑ, ϕ) des rayons sonores (30),
- une deuxième grille cartésienne (33) plus grossière est formée, dont les coordonnées angulaires (ϑ, ϕ) sont rendues discrètes de telle sorte que la largeur des incréments angulaires correspond à l'angle d'ouverture vertical ou horizontal d'un secteur de réception (11) et
- toutes les intensités de diffusion (I) enregistrées sont inscrites dans la deuxième grille (33) sous les secteurs de réception (11) correspondants en association avec les valeurs de distance (r) correspondantes en fonction de leurs coordonnées angulaires et les intensités de diffusion (I) qui appartiennent aux mêmes valeurs de distance (r) au sein d'un secteur de réception (11) sont ici additionnées.

2. Procédé selon la revendication 1, **caractérisé en ce qu'**à partir de la première grille (32) avec les coordonnées angulaires (ϑ, ϕ) verticales et horizontales des rayons sonores (30) et une coordonnée de distance mise en grille est formée une première matrice tridimensionnelle ϑ, ϕ, r (31) dans laquelle est effectué l'enregistrement des intensités de diffusion (I) et des valeurs de distance (r) déterminées par rayon sonore (30) et qu'à partir de la deuxième grille (33) avec les coordonnées angulaires (ϑ, ϕ) verticales et horizontales des secteurs de réception (11) et la même coordonnée de distance est formée une deuxième matrice tridimensionnelle ϑ, ϕ, r (37) dans laquelle est effectuée l'inscription des intensités de diffusion (I) et des valeurs de distance (r) par secteur de réception (11).

3. Procédé selon la revendication 1 ou 2, **caractérisé en ce qu'**un certain nombre de rayons sonores (30) ayant un écart angulaire vertical et horizontal à chaque fois constant entre eux sont définis en fonction d'une résolution angulaire locale souhaitée dans un segment de secteur du secteur d'espace et le nombre de rayons sonores (30) est adapté à un format d'image d'un système de visualisation de telle sorte qu'un rayon sonore (30) correspond à chaque fois à un pixel (point d'image) dans le format d'image et que les segments de secteur sont assemblés de préférence de manière continue et sans chevauchement pour former le secteur d'espace.

4. Procédé selon la revendication 3, **caractérisé en ce que** dans la première matrice ϑ, ϕ, r (31) sont inscrites toutes les intensités (I) détectées dans un segment de secteur du secteur d'espace ainsi que les valeurs de distance (r) correspondantes et les limites de la matrice dans le sens vertical et horizontal sont définies par les coordonnées angulaires verticales et horizontales des limites du segment de secteur dans le secteur d'espace et la grille verticale et horizontale de la matrice ϑ, ϕ, r (31) est définie par les écarts angulaires verticaux et horizontaux des rayons sonores (30) dans le segment de secteur.

5. Procédé selon la revendication 3 ou 4, **caractérisé en ce que** les limites verticales et horizontales de la deuxième matrice ϑ, ϕ, r (37) sont définies par l'angle d'ouverture vertical et horizontal du secteur d'espace.

6. Procédé selon l'une des revendications 1 à 5, **caractérisé en ce que** pour tenir compte des propriétés de l'antenne, la distribution dans l'espace des intensités de diffusion (I) déterminées par rayon sonore (30) ou par secteur de réception (11) est pliée avec la caractéristique directionnelle de l'antenne réceptrice (10) et/ou multipliée par la caractéristique directionnelle d'une antenne réceptrice qui émet l'impulsion sonore émise.

7. Procédé selon l'une des revendications 1 à 6, **caractérisé en ce que** les données de sonar générées dans chaque secteur de réception (11) subissent une manipulation mathématique afin de tenir compte des formes d'impulsion, de la valeur du bruit et de l'atténuation de propagation.

8. Procédé selon l'une des revendications 1 à 7, **caractérisé en ce que** les données de sonar générées par secteur de réception (11) sont converties pour une représentation affichée.
